# EUROPEAN PATENT APPLICATION

(11) **EP 0 807 679 A1**
(43) Date of publication of application: **19.11.1997**
(21) Application number: 97201399.9
(22) Date of filing: 09.05.1997
(51) Int. Cl.: C12G 1/02

(54) **Apparatus for the maceration/fermentation of grapes, particularly of pressed grapes**

(30) Priority: 14.05.1996 IT TV960028 U
(71) Applicant: VELO Spa, I-31030 Altivole, Treviso (IT)
(72) Inventor: Velo, Antonio, 31031 Caerano San Marco (Treviso) (IT)
(74) Representative: Caregaro, Silvio

(57) **Abstract**

Apparatus for maceration/fermentation of pressed grapes, of the type comprising a tank (10) capable of being filled with a predetermined quantity of said grapes, inside which tank are arranged means for the maceration/ferment- ation of the pressed grapes, capable of assuming a first operating position while they are set in rotation in a first direction of rotation, and for the discharge of the exhausted dregs when arranged in a second operating position inclined with respect to the first when set in rotation in the opposite direction of rotation to the preceding one. The tank (10) of the apparatus is stationary and the said means which provide for the maceration/fermentation of the pressed grapes and also the discharge of the exhausted dregs are constituted by a plurality of blades (22), each arranged on a support pin (28) which starts from a substantially central and longi- tudinal shaft (18) arranged within the shell of the tank and is carried in a rotary manner at the respective ends of the latter, at one of which ends it is connected to means (20) which control its rotation in one or the other of the said directions of rotation.

## Description

The subject of the present invention is an apparatus for the maceration/fermentation of grapes, particularly of pressed grapes.

More particularly, the present invention relates to an apparatus of the above-mentioned type which is suitable for carrying out the maceration and the fermentation, that is to say, the homogenization of pressed grapes and, at the end of such operations, is capable of conveying the exhausted dregs, that is to say, the skins, pips, stalks and the like to the discharge after the must obtained has been duly removed from the apparatus.

An apparatus of this type is known and is generally constituted by a tank with an essentially cylindrical shell which is suitably supported by a support frame and set in rotation by drive means such as a gearmotor or the like.

The tank is provided with a port-hole for loading the pressed grapes and with a second port-hole for the discharge of the exhausted dregs, through which the latter are discharged once the operations of maceration and fermentation are completed. A manifold with valve is provided for the removal of the must.

Inside the aforesaid tank, integrally fixed to the wall of its shell, control means are provided which are capable of carrying out the operating cycle described above, that is to say, that of maceration/fermentation and discharge of the exhausted dregs, depending on the direction of rotation imparted to the tank.

Such means are generally constituted by a helically or spirally shaped body which is set in rotation for the working of the said tank, being fixed to the latter. If the direction of rotation of the said body is such that it pushes the pressed grapes in the opposite direction from the discharge port-hole, it effects the maceration/fermentation of the pressed grapes.

Such a homogenizing operation is carried out several times a day in the mass of pressed grapes, thus renewing the liquid in contact with the skins in order to extract from the latter, to the greatest possible extent, those essential elements which characterize and improve the final product that can be obtained, that is to say, the must, such elements being constituted by aromas, colours, tannins and the like.

At the end of the step of homogenization of the pressed grapes there is then obtained a must having the desired characteristics. The valve is therefore opened on the discharge manifold through which the must is conveyed to a collecting tank. During this operating step, the spiral body is at a standstill, insofar as the tank is not set in rotation.

When all the must has been discharged, the corresponding valve is closed again and the tank is set in rotation in the opposite direction to the preceding one so that the said spiral body pushes the exhausted dregs towards the discharge from the tank, the corresponding porthole of which is opened so that the exhausted products are expelled therefrom.

Once the tank has been completely emptied, the cycle described above resumes again with a sequence of steps as listed above.

The apparatus of the prior art described is suitable for performing the task assigned to it in a substantially reliable and efficient manner, but nevertheless has drawbacks, among which the following are enumerated:
- production of a suitable support frame for the rotary tank capable of simultaneously supporting the latter and permitting rotation thereof;
- provision of a drive motor of suitable capacity which must effect rotation of a body of not inconsiderable weight, which is precisely that of the tank filled with pressed grapes;
- structural complications of the tank, the spiral body having to be first produced and then fixed inside the shell of the tank;
- the need to produce the shell of the tank with a fairly substantial thickness since the latter is subject to not inconsiderable stresses when the spiral body rotates in one direction or the other.

There has now been designed, and constitutes the subject of the present invention, an apparatus for the maceration/fermentation of pressed grapes, which apparatus makes it possible to eliminate the drawbacks of the conventional apparatus.

It is therefore one of the principal objectives of the present invention to provide an apparatus of the type in question in which the support frame is eliminated and wherein the tank is of simple and therefore economical construction, and also easy to maintain.

Another objective of the present invention is that of providing an apparatus as indicated above in which the wall thickness of the shell of the tank does not need to be substantial, since in the apparatus according to the present invention the said shell is not subjected to high stresses.

The subject of the present invention is therefore an apparatus for the maceration/fermentation of pressed grapes, of the type comprising a tank capable of being filled with a predetermined quantity of said grapes, inside which tank are arranged means for the maceration/fermentation of the pressed grapes while they are set in rotation in a first direction, and for the discharge of the exhausted dregs when set in rotation in the opposite direction of rotation from the preceding one, which is characterized in that the tank of the apparatus is stationary and the said means which provide for the maceration/fermentation of the pressed grapes and also for the discharge of the exhausted dregs are constituted by a plurality of blades, each arranged on a support pin which starts from a substantially central and longitudinal shaft inside the shell of the tank and is carried in a rotary manner at the respective ends of the latter, at one of which ends it is connected to means which control its rotation in one or the other of the said directions of rotation.

The characteristics and the advantages of the apparatus according to the present invention will be revealed by the following detailed description of a preferred embodiment provided by way of non-limitative example with reference to the accompanying drawings, in which:
- Figure 1 is a diagrammatic view in longitudinal section of the apparatus during the step of maceration/fermentation of the pressed grapes;
- Figure 2 is a diagrammatic view of the apparatus along the section II-II in Figure 1;
- Figure 3 is a view analogous to Figure 1, illustrating the apparatus during the step of discharging the exhausted dregs, and
- Figure 4 is a view of the apparatus according to the section IV-IV in Figure 3.

With reference to the aforesaid figures, the apparatus according to the invention comprises an essentially cylindrical tank indicated as a whole by 10, and the diameter and length of which are of course commensurate with the desired capacity of pressed grapes which the latter is intended to contain for the treatment specified above.

According to one of the fundamental characteristics of the apparatus according to the invention, the tank 10 is stationary, that is to say, non-rotatory, and is supported underneath by four support legs 12.

The tank 10 is provided at the top, at one of its ends, with a port-hole 14 for loading the pressed grapes inside it, and underneath, at the same end, with a second port-hole 16 for the discharge of the exhausted dregs at the end of the operating steps of maceration/fermentation of the pressed grapes.

In order to keep the illustration simple, the manifold with which the tank 10 is provided for the customary discharge of the must at the end of the operating steps of maceration/fermentation is not illustrated.

Referring still to the accompanying drawings, inside the tank 10 there is arranged an essentially central and longitudinal shaft 18, the ends of which are supported by the ends of the tank 10 so as to be freely rotatable.

One of the aforesaid ends of the shaft 18 is connected in any known manner to a gearmotor 20 arranged outside the tank 10 and fixed, also in any known manner which is not shown, to the shell thereof

The operation of the gearmotor 20 is reversible and the rotation speed is variable, insofar as it must be capable of imparting rotation in one direction or the other to the shaft 18 connected thereto and therefore to the means associated with the said shaft 18 for the operating steps of maceration/fermentation of the pressed grapes and the discharge of the exhausted dregs.

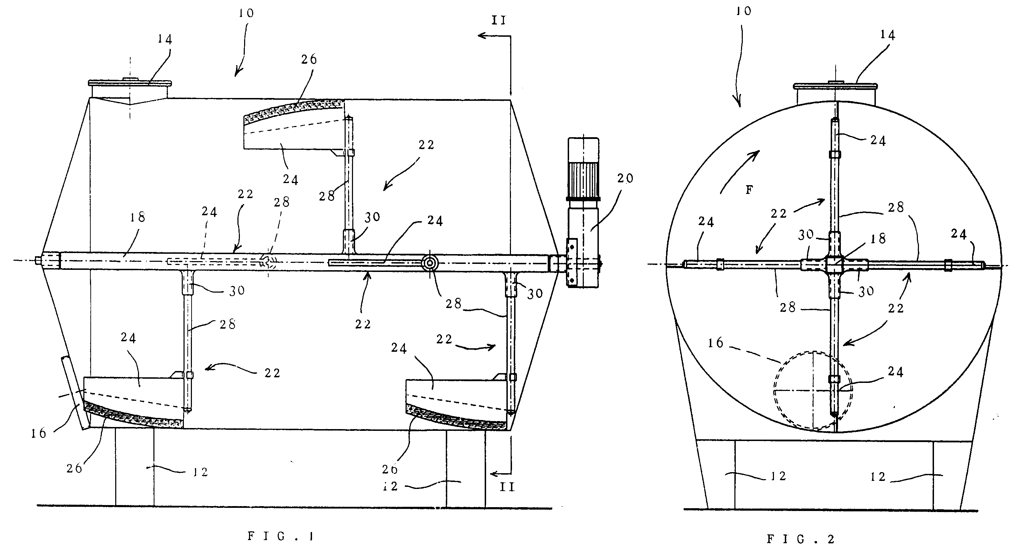

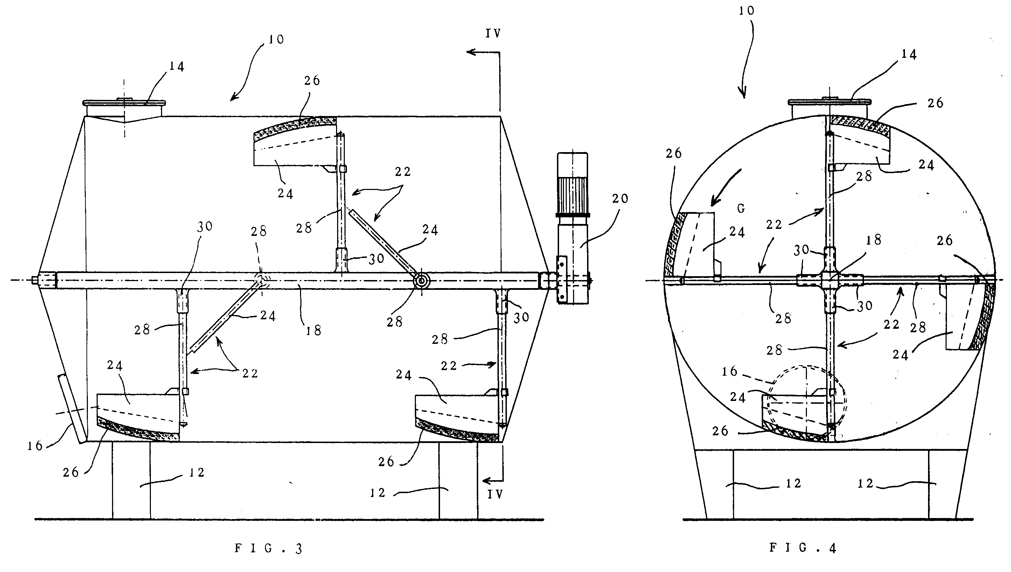

According to a further characteristic of the apparatus according to the present invention, with the shaft 18 there are associated means which provide for the execution of the maceration/fermentation of the pressed grapes when the shaft is set in rotation in a first predetermined direction, assuming a first operating position as illustrated in Figures 1 and 2, and provide successively for the discharge of the exhausted dregs when the said shaft is set in rotation in the opposite direction to the preceding one, assuming a second operating position as illustrated in Figures 3 and 4.

The said means, according to one of the characteristics of the apparatus according to the present invention, are constituted by a series of blades, each indicated as a whole by 22, which in the exemplary embodiment in question of the apparatus according to the invention are five in number.

All the blades 22 of the series provided in the apparatus according to the invention have the same configuration and more precisely are of the type that can be defined as "flag-like" and, even more precisely, of the orientatable type. In fact, the "flags" assume a first or second operating position depending on whether the shaft 18 is rotated in one direction or in the other.

As can be seen from the accompanying drawings, each of the blades 22 consists essentially of a "flag" or actual blade body 24 which is essentially trapezoidal in shape.

As can be seen from the accompanying drawings, and in particular from Figures 2 and 4, the upper side 26 of the blade body 24 of each blade 22 has a curvilinear profile so as to match the shape of the internal profile of the shell of the tank 10, particularly as regards the state of engagement of the said side 26 illustrated in Figure 4 as will be described hereinafter.

The side 26 of the blade body 24 is further provided with a coating of elastomeric material such as rubber or the like in order to prevent harmful scraping and possible damage to the internal surface of the shell of the tank 10.

Each blade body 24 is carried at the upper end of an arm 28 which extends radially with respect to the central shaft 18 and is fixed in any known manner at its lower end to a sleeve 30 produced in one piece with the shaft 18.

The blades 22 are further arranged in an offset manner over the length of the shaft 18 and, as can be seen more particularly in Figures 1 and 3, each blade 22 is offset by 90° with respect to the adjacent one. In this way, as will become clearer hereinafter, in the operating position for maceration/fermentation the blades 22 operate over the entire length of the tank 10. When they assume the operating position for discharge of the exhausted dregs, their arrangement may be substantially similar to a helix or spiral for the reason specified hereinafter.

As stated above, the blades 22, and more precisely their bodies 24, are of the type which can be orientated according to the direction of rotation imparted to the shaft 18 by the gearmotor 20. More precisely, by orientation of the blades 22 there should be understood the possibility of the blade bodies 24 being able to assume the said first or second operating position, which positions differ from one another by an angle of predetermined amplitude, generally of the order of 50°. This can be seen by comparison of Figures 1 and 2 with Figures 3 and 4.

When the gearmotor 20, in particular its drive shaft, is caused to rotate in a clockwise direction as indicated by the arrow F in Figure 2, the blades, or more precisely the blade bodies 24, are arranged as illustrated in Figures 1 and 2, that is to say, in a radial direction and with the longitudinal axis of the blade body 24 parallel to the longitudinal axis of the shaft 18.

In the aforesaid position the apparatus is capable of carrying out the step of maceration/fermentation of the pressed grapes, since the various blade bodies 24, rotating inside the shell of the tank 10, act as agitators or homogenizing elements for the said pressed grapes, making it possible, as already specified above, to extract from them the characteristic elements of the must which is obtained. In essence, the blades 22 agitate the pressed grapes along substantially annular paths within the tank 10 without bringing about longitudinal displacements thereof.

This action may be likened to a mixing of the grapes with the production of a must, the characteristics of which depend on the speed of rotation of the blades 22 and on the number of times this operation is carried out during the production cycle.

Once this operating step of the apparatus has come to an end, the rotation of the shaft 18, and therefore that of the blades 22, is arrested and the discharge of the must then takes place through the known discharge manifold (not illustrated) provided in the tank 10.

Once all the must has been discharged, the corresponding manifold is closed and the blades 22 are rotated in the opposite direction from the preceding one as illustrated in particular in Figures 3 and 4, that is to say, by setting the drive shaft of the motor 20 in rotation in an anti-clockwise direction as indicated by the arrow G in Figure 4.

The aforesaid reversal of the direction of rotation has the effect of modifying the position of the blade bodies 24, in particular effecting their rotation about the arms 28, which rotation is of a predetermined amplitude and such as to incline the said bodies 24 with respect to the longitudinal axis of the shaft 18, as can be seen from the illustration of the apparatus even in Figure 3, in which the intermediate blades 22 can clearly be seen to be inclined.

The rotation in question is achieved by means of a particular connection between the blade bodies 24 and the arms 28 which is illustrated diagrammatically in the accompanying drawings. More precisely, the said connection is such as to prevent the blade bodies 24, in contact with the material to be treated and therefore encountering a certain resistance, from going beyond the two limit positions indicated above, and the said connection may be constituted for example by a hinged coupling (male pin on the arm 28 and female socket on the blade bodies 24). This coupling is permitted limited rotation to an angle sector of approximately 50° by means of a special key integral with the male pin. The male pin is the element which remains stationary while the blade body 24 rotates thereon.

It is interesting to note that the arrangement of the blade bodies 24, in the second operating position shown in Figures 3 and 4, is comparable to that of a helix or spiral which is produced not continuously but in segments, but which has the same function and the same effect as a continuous spiral, that is to say, that of conveying the exhausted dregs towards the discharge port-hole 16 which, if open, allows the dregs to be expelled from the tank 10.

The advantages derived from the apparatus according to the present invention are clear and the most remarkable can be summarized as follows:
1. constructional simplification of the apparatus, especially as regards the substitution of the support frame of the tank 10 by four simple legs;
2. production of the tank 10 with reduced thickness of the wall, since the stresses generated by the rotation of the blades 22 are limited and localized, or more precisely distributed over the inner surface of the shell of the tank 10;
3. use of a gearmotor 20 of reduced capacity and therefore with a consumption which is less than that of the conventional apparatuses.

Finally, it is clear that conceptually and structurally equivalent variants and/or modifications may be applied to the apparatus according to the present invention without thereby departing from the scope of protection of the invention itself.

## Claims

1. Apparatus for the maceration/fermentation of pressed grapes, of the type comprising a tank capable of being filled with a predetermined quantity of the said grapes, inside which tank are arranged means for the maceration/fermentation of the pressed grapes while they are set in rotation in a first direction, and for the discharge of the exhausted dregs when set in rotation in the opposite direction of rotation to the preceding one, characterized in that the tank (10) of the apparatus is stationary and the said means which provide for the maceration/fermentation of the pressed grapes and also the discharge of the exhausted dregs are constituted by a plurality of blades (22), each arranged on a support pin (28) which starts from a substantially central and longitudinal shaft (18) inside the shell of the tank (10) and iscarried in a rotary manner at the respective ends of the latter, at one of which ends it is connected to means (20) which control its rotation in one or the other of the said directions of rotation.

2. Apparatus according to Claim 1, characterized in that the said blades (22) have a substantially flag-like configuration and each is offset with respect to the adjacent one along the longitudinal axis of the shaft (18).

3. Apparatus according to Claim 2, characterized in that the angle of offset between the adjacent blades (22) is 90°.

4. Apparatus according to Claim 1, characterized in that the bodies (24) of the flag-like blades (22) are carried by an arm (28) fixed at one end to the shaft (18) and are connected to the latter by means of a connection which allows the said bodies (24) of the flag-like blades (22) to assume, depending on the direction of rotation of the shaft (18), a first position in which the said bodies (24) are parallel to the longitudinal axis of the shaft (18), or a second position inclined by a predeterminedangle with respect to the first.

5. Apparatus according to Claim 4, characterized in that the said connection of the bodies (24) of the flag like blades (22) allows free rotation of the latter on the arm (28) and provides on the latter a hinge system with a stop arranged at a predetermined angle and constituted by a suitable key which engages with a grooved female socket integral with each of the said arms (24) of the flag-like blades (22).

6. Apparatus according to Claim 4, characterized in that, when the bodies (24) of the flag-like blades (22) are arranged substantially parallel to the longitudinal axis of the shaft (18), they bring about the mixing of the pressed grapes, engaging with the latter along substantially annular paths with respect to the inner surface of the tank (10).

7. Apparatus according to Claim 4, characterized in that, when the bodies (24) of the flag-like blades (22) assume a position which is inclined with respect to the longitudinal axis of the shaft (18), the latter is caused to rotate in such a way that the said bodies (24) push the exhausted dregs towards a discharge port-hole (16) with which the tank (10) is provided.

8. Apparatus according to Claim 1, characterized in that the side (26) of the bodies (24) of the flag-like blades (22) in contact with the inner surface of the shell of the tank (10) has a coating of elastomeric material or the like.

9. Apparatus according to Claim 8, characterized in that the said side (26) of the bodies (24) of the flag like blades (22) has a substantially curvilinear external profile.
